# EUROPEAN PATENT SPECIFICATION

(11) **EP 2 272 738 B1**
(45) Date of publication and mention of the grant of the patent: **23.10.2013**
(21) Application number: 10168720.0
(22) Date of filing: 07.07.2010
(51) Int. Cl.: B62D 33/04, B60P 7/14, B60R 21/02

(54) **Partition wall bracket**
Trennwandhalterung
Support mural de séparation

(30) Priority: 07.07.2009 GB 0911676
(43) Date of publication of application: 12.01.2011
(73) Proprietor: Nissan Motor Manufacturing (UK) Ltd., Bedford Bedfordshire MK43 0DB (GB)
(72) Inventor: Brennan, Vince, Bedford, Bedfordshire MK43 0DB (GB)

(56) References cited:
- AU-A- 6 906 498
- US-A- 4 971 378
- US-A1- 2006 082 177

## Description

The present invention relates to light commercial vehicles; and in particular, but not exclusively, to a load bearing bracket for a light commercial vehicle partition wall. Aspects of the invention relate to a partition wall for a vehicle and to a vehicle.

It is common in light commercial vehicles such as B-segment vans to provide a partition wall which separates a cargo area at the rear of the vehicle from a cabin or occupant compartment at the front of the vehicle. Such partitions are provided to isolate the driver and any passenger from the cargo. This is particularly important in the event of severe braking or a collision, when the cargo can shift forwards within the vehicle. The partition wall dissipates the energy of the moving cargo so as to prevent the cargo intruding into the cabin. It follows therefore that the partition walls must be strong enough to restrain the cargo in the cargo area and to limit the extent to which it may shift towards the cabin.

It is known to provide a partition wall with a substantially vertical upper portion and a forwardly extending base portion so as to increase the length of the cargo area at floor level. This is advantageous in that it allows two pallets to be loaded into the cargo area. In vehicles with this feature, the partition wall has a bend in it to allow for the base portion to extend in a forward direction from the upper portion. However, in extreme conditions, for example those experienced in a collision, the cargo can load the partition wall directly at the bend in the partition wall. Such a loading results in high forces being transmitted up the partition wall and into the vehicle body and roof. This in turn can lead to deformation of the vehicle body, which can potentially damage the vehicle beyond economical repair. Thus a relatively minor incident resulting in the cargo loading the partition wall can lead to irreparable damage to the vehicle.

Vehicle partitions with different portions are known in the art, such as that disclosed in US4971378, which discloses a hinged partition.

It is an object of the present invention to at least mitigate some of the above problems.

Accordingly, there is provided a partition wall for a vehicle, the partition wall comprising an upper portion and a separate lower portion, wherein the upper portion and the lower portion are connected to one another by a deformable joint, characterised in that the joint (136, 236) comprises a first bracket (138, 238) mounted on the upper portion (122, 222), a second bracket (140, 240) mounted on the lower portion (123, 223) and a deformable pin (142, 242) arranged to connect the first (138, 238) and second (140, 240) brackets in normal use, and the pin (142, 242) deforms to control relative movement of the first (138, 238) and second (140, 240) brackets under impact loading conditions.
In an example, the upper portion and the lower portion each have a tubular frame mounted to the vehicle. Alternatively, the lower portion may comprise a sheet of material mounted to the vehicle.

Preferably, the joint is configured to deform when a load applied to the partition wall exceeds a pre-determined value, so as to minimize the load transferred via the partition wall to a vehicle body.

Advantageously, the deformable joint allows loading applied by a vehicle cargo against the partition wall to be dissipated in a forward direction, rather than an upward direction through the partition wall and into the vehicle body. (In this context, "forward" means "in the direction of vehicle travel") This manages the forces generated by the loading and greatly reduces the chance of damage to the vehicle body whilst still ensuring that the partition wall remains intact. In this way the partition wall is still able to protect the driver and passenger, by restraining the cargo in the cargo area of the vehicle.

In an example, the upper portion is substantially upright.

In an example, the lower portion is forwardly extending.

In an example, the upper and lower portions are arranged at an obtuse angle to one another.

In an example, the joint is frangible.
In an example, the pin is frangible.

According to an aspect of the present invention, there is provided a vehicle comprising a partition wall according to one or more of the preceding paragraphs.

It will also be appreciated by one skilled in the art that the preferred and/or optional features relating to the present invention may be used either alone or in appropriate combination.

The invention will now be described, by way of example only, and with reference to the following drawings, in which:
Figure 1 is a schematic side view of a light commercial vehicle showing a known partition wall in hidden detail;
Figure 2 is a schematic plan view of the light commercial vehicle of Figure 1 showing the known partition wall in hidden detail;
Figure 3 is a rear view of a known partition wall;
Figure 4 is a side view of a further known partition wall;
Figure 5 is a side view of a partition wall of the current invention;
Figure 6 is a side view of the partition wall of Figure 5 showing the brackets in greater detail;
Figure 7 is a side view of a further embodiment of a partition wall of the current invention; and
Figure 8 is a side view of the partition wall of Figure 7 showing the brackets in greater detail.

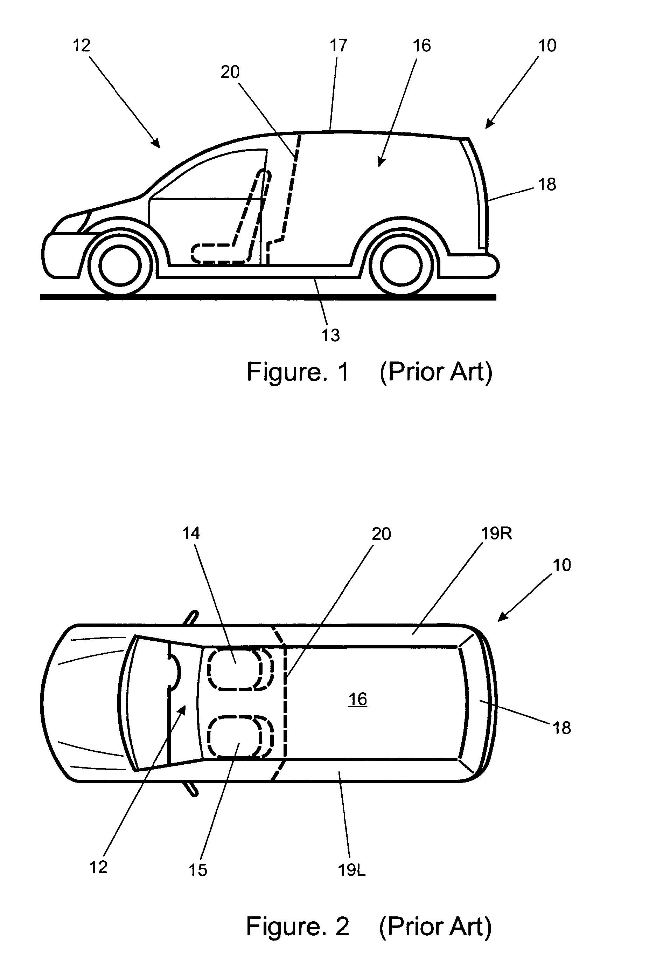

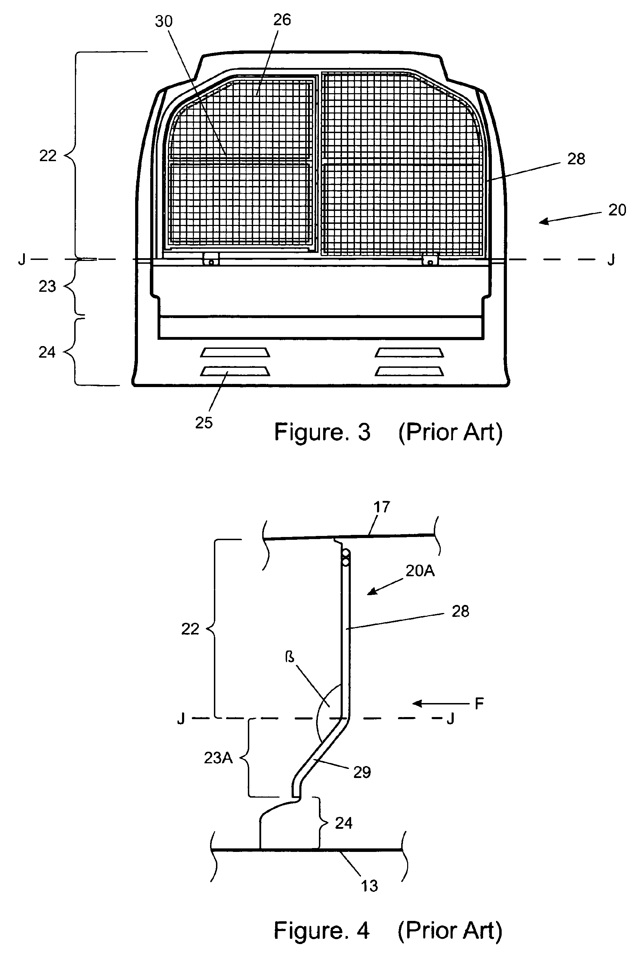

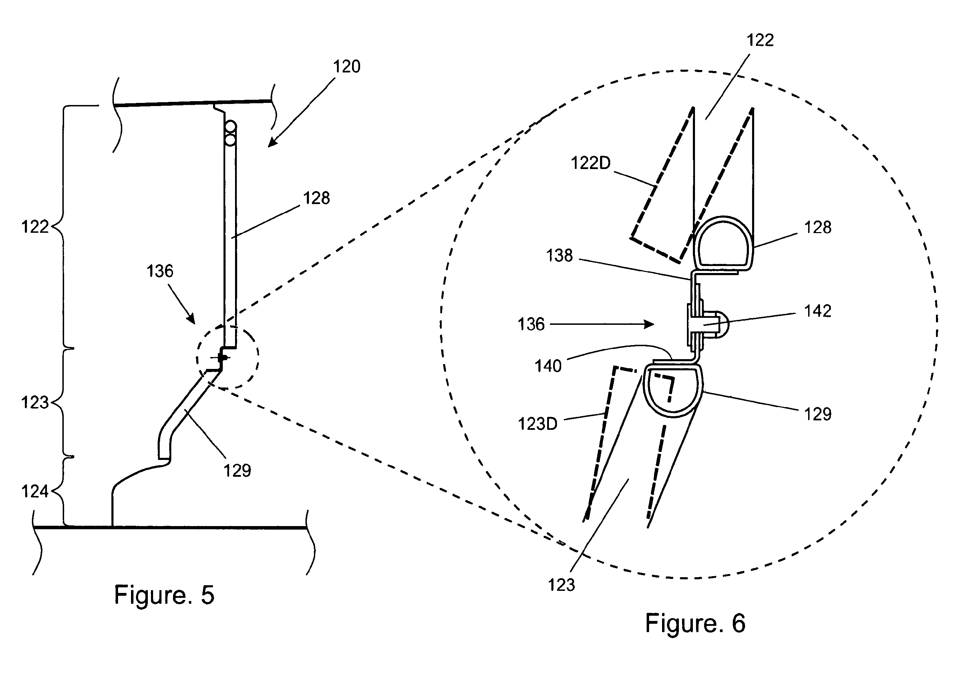

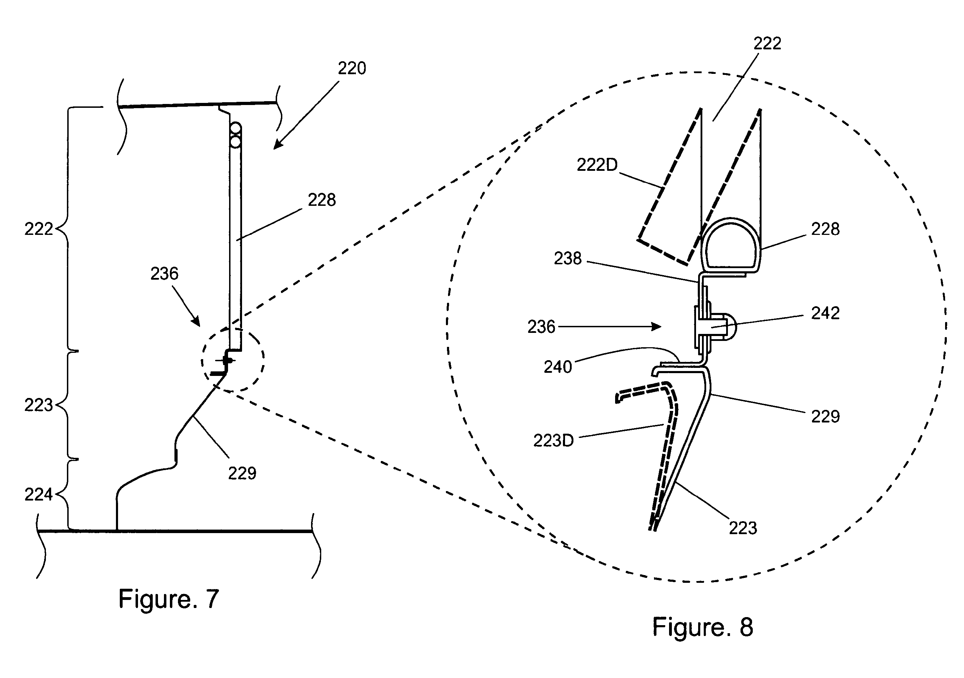

In Figures 1 and 2, a light commercial vehicle 10 is shown having an occupant compartment or cabin indicated generally at 12. The cabin includes a driver's seat 14 and a passenger seat 15. Situated behind the cabin 12 is a cargo area indicated generally at 16. The cargo area 16 is accessed by at least one rear door 18. Both the cabin area 12 and the cargo area 16 are bounded by a roof 17 above, and a floor panel 13 below. The sides of both the cabin area 12 and the cargo area 16 are enclosed by substantially vertical left and right body sides 19L and 19R. Positioned between the cabin 12 and the cargo area 16 is a partition wall 20 which is shown in dashed lines in Figures 1 and 2 and is representative of the known partition walls 20 of Figure 3 and 20A of Figure 4, the partition wall 120 of the present invention as shown in Figures 5 and 6, and the partition wall 220 of the present invention as shown in Figures 7 and 8.

The known partition wall 20 is fixed to the vehicle body so that it offers a fixed barrier between the cabin area 12 and the cargo area 16.

In Figure 3, a known partition wall 20 is shown having an upper portion 22, a lower portion 23 of profiled sheet material, and a base portion 24, also formed of profiled sheet material, which is pressed or moulded in a suitable shape to fit vehicle 10. The upper portion 22 is formed from a wire mesh grille 26 supported on a tubular frame 28, and includes a door 30 provided to increase the length of the cargo area 16 when the passenger seat 15 is not being used. The door 30 may be constrained to only open in a single direction, e.g. forwardly, by means of a stop or a door jamb (not shown). The tubular frame 28 of upper portion 22 is fixed by welding or other joining technique to the lower portion 23 to form a rigid fixed structure. The tubular frame 28 of the upper portion 22, and the sheet material of lower portion 23 of the wall 20 are secured to the vehicle via threaded fasteners, brackets, welding or other suitable joining techniques (not shown for clarity). The base portion 24 of wall 20 includes ventilation apertures 25 and adjacent mounting points for use in joining partition wall 20 to a transverse body panel (not shown). Line J-J represents the joint between upper portion 22 and lower portion 23.

Figure 4 shows a wall 20A similar to that in Figure 3. In this case, the lower portion 23A comprises a tubular frame 29 similar to tubular frame 28 in upper portion 22. Frame 29 surrounds a wire mesh grille (not shown). Upper portion 22 is substantially upright, while lower portion 23A and base portion 24 extend forwardly with respect to the direction of travel of the vehicle. As a result an obtuse angle 13 is formed between the upper 22 and lower 23A portions.

The effect of the geometry of the upper portion 22 relative to the lower portion 23A is that, in the event of a large load being applied to the partition wall 20A in direction F, for example in the event of the cargo shifting forwards in the cargo area 16 during heavy braking and loading the wall 20A, a substantial load is passed up the upper portion 22 and down the lower portion 23A towards the vehicle roof 17 and body. In severe cases this can lead to the irreparable deformation of the vehicle roof and body.

An alternative to the walls 20 and 20A is offered by the present invention by way of wall 120 of Figures 5 and 6 as follows. The wall has an upper portion 122 and a lower portion 123 each formed from a wire mesh grille supported by a tubular frame 128, 129 mounted to the vehicle via threaded fasteners, brackets, welding or other suitable joining techniques (not shown for clarity). Base portion 124 is a steel pressing similar to base portion 24 in Figures 3 and 4. The difference between the known walls 20, 20A and the wall 120 of the present invention is that the upper portion 122 of wall 120 is not rigidly attached to the lower portion 123. Rather, the portions are connected by a flexible joint indicated generally at 136 and shown in greater detail in Figure 6.

The joint 136 has a first bracket 138 attached to the tubular frame 128 around the upper portion 122, and a second bracket 140 attached to the tubular frame 129 around the lower portion 123. The brackets 138, 140 have apertures which are co-aligned to receive a pin 142. The pin 142 is arranged to connect the first and second brackets 138, 140 securely to one another, retaining them in position to ensure that the upper and lower portions 122, 123 are maintained in position relative to one another in normal use of the partition wall. In other words when the wall 120 is experiencing normal operational loads, the wall acts exactly like the known walls 20 or 20A.

However, in the event that a shifting cargo applies a significant load to the wall 120, the joint 136 will deform, allowing the upper and lower portions 122 and 123 to assume their deflected positions 122D and 123D respectively, as shown by the dashed lines in Figure 6. If the loading of the wall 120 by the cargo exceeds a pre-determined limit, the joint 136 will yield under the loading, releasing the connection between upper and lower portions 122 and 123. The release mechanism of the joint 136 may be provided by configuring the pin receiving apertures of the brackets 138, 140 to release the pin 142 once a pre-determined load is exceeded. Alternatively, the pin 142 may be frangible, and configured to yield above a pre-determined load.

Once the loading by the cargo against the wall has exceeded a pre-determined level, the release mechanism of the joint 136 will permit the upper and lower portions 122, 123 of the wall 120 to separate. The separation of the upper and lower portions 122, 123 of the wall 120 is managed by the strength and rigidity of the tubular frames 128, 129 around the upper and lower portions 122, 123 and by the other mountings securing the tubular frames of the upper and lower portions to the vehicle body. By allowing the upper and lower portions 122 and 123 of the wall to separate, the transmission of loads into the vehicle body is managed, reducing the probability of the body being irreparably damaged as a result of shifting cargo loading the wall 120.

While the embodiment of Figures 5 and 6 shows a wall 120 similar to known wall 20A in figure 4, having a tubular frame 129 around its lower portion 123, Figures 7 and 8 show a wall 220 which is based on the known wall 20 shown in Figure 3. Wall 220 therefore has a lower portion 223 made of a sheet 229 of structural material, such as steel or structural plastic. Bracket 240 therefore attaches directly to sheet 229; rather than to a frame as shown in Figures 5 and 6. In all other aspects, this embodiment corresponds to the wall 120 of Figures 5 and 6.

In an alternative arrangement (not shown), bracket 240 may be formed integrally with sheet 229. It may also be found convenient to combine lower portion 223 with base portion 224, as both parts are made of similar or identical materials, and by a similar or identical process. Such a combined lower panel would need to incorporate mounting points and ventilation apertures 25 as shown in Figure 3.

Although the examples shown in the Figures show partition walls formed from upper and lower portions, it will be appreciated that the present invention may be employed in partition walls comprising multiple portions held together via deformable brackets. Additionally, the present invention does not limit or otherwise influence the size, shape or relative orientation of the plurality of portions forming the wall. In this way, a partition wall of any size or shape may be provided to suit any vehicle or cargo application.

It will be appreciated that several brackets may be provided across the width of the walls 120 or 220; and that their size, shape and yield strength may be optimized for any given vehicle or loading application. It will also be appreciated by one skilled in the art that it may be appropriate, in certain vehicle applications, to mount at least a part of one or both portions 122, 123 of the wall 120 to the vehicle via joints 136 in order to manage the loading of the vehicle body from the wall 120 during the restraint of a shifting cargo. Similar adaptation may be applied to the basic design of wall 220 as illustrated.

Other advantages will be apparent to one skilled in the art and the present examples and embodiments are to be considered illustrative and not restrictive. The invention is not to be limited to the details given herein, but may be modified within the scope and equivalence of the appended claims.

## Claims

1. A partition wall (120, 220) for a vehicle, the partition wall comprising an upper portion (122, 222) and a separate lower portion (123, 223), wherein the upper portion (122, 222) and the lower portion (123, 223) are connected to one another by a deformable joint (136, 236), **characterised in that**:
the joint (136, 236) comprises a first bracket (138, 238) mounted on the upper portion (122, 222), a second bracket (140, 240) mounted on the lower portion (123, 223) and a deformable pin (142, 242) arranged to connect the first (138, 238) and second (140, 240) brackets in normal use, and the pin (142, 242) deforms to control relative movement of the first (138, 238) and second (140, 240) brackets under impact loading conditions.

2. The partition wall (120) of claim 1, wherein the upper portion (122) and the lower portion (123) each have a tubular frame (128, 129) mounted to the vehicle.

3. The partition wall (220) of claim 1, wherein the lower portion (223) comprises a sheet of material (229) mounted to the vehicle.

4. The partition wall (120, 220) of any preceding claim, wherein the joint (136, 236) is designed to deform when a load applied to the partition wall (120, 220) exceeds a pre-determined value so as to minimize the forces transferred via the partition wall (120, 220) to a vehicle body.

5. The partition wall (120, 220) of any preceding claim, wherein the deformable joint (136, 236) allows loading applied by a vehicle cargo against the partition wall (120, 220) to be dissipated in a forward direction, rather than an upward direction through the partition wall (120, 220) and into the vehicle body.

6. The partition wall (120, 220) of any preceding claim, wherein the upper portion (122, 222) is substantially upright.

7. The partition wall (120, 220) of any preceding claim, wherein the lower portion (123, 223) is forwardly extending.

8. The partition wall (120, 220) of claim 7, wherein the upper (122, 222) and lower (123, 223) portions are arranged at an obtuse angle to one another.

9. The partition wall (120, 220) of any preceding claim, wherein the joint (136, 236) is frangible.

10. The partition wall (120, 220) of any preceding claim, wherein the pin (142, 242) is frangible.

11. The partition wall (120, 220) of any preceding claim, wherein the lower portion (123, 223) comprises ventilation apertures (25).

12. A vehicle comprising a partition wall (120, 220) according to any of the preceding claims.

## Patentansprüche

1. Trennwand (120, 220) für ein Fahrzeug, wobei die Trennwand einen oberen Abschnitt (122, 222) und einen getrennten unteren Abschnitt (123, 223) umfasst, wobei der obere Abschnitt (122, 222) und der untere Abschnitt (123, 223) durch eine verformbare Verbindung (136, 236) miteinander verbunden sind, **dadurch gekennzeichnet, dass**:
die Verbindung (136, 236) eine an dem oberen Abschnitt (122, 222) angebrachte erste Halterung (138, 238), eine an dem unteren Abschnitt (123, 223) angebrachte zweite Halterung (140, 240) und einen verformbaren Zapfen (142, 242), der dazu angeordnet ist, im normalen Einsatz die erste (138, 238) und die zweite (140, 240) Halterung zu verbinden, umfasst, und sich der Zapfen (142, 242) unter Stoßbelastungsbedingungen verformt, um eine Relativbewegung der ersten (138, 238) und der zweiten (140, 240) Halterung zu steuern.

2. Trennwand (120) nach Anspruch 1, wobei der obere Abschnitt (122) und der untere Abschnitt (123) jeweils einen Rohrrahmen (128, 129) aufweisen, der an dem Fahrzeug angebracht ist.

3. Trennwand (220) nach Anspruch 1, wobei der untere Abschnitt (223) eine Platte aus Material (229) umfasst, die an dem Fahrzeug angebracht ist.

4. Trennwand (120, 220) nach einem der vorangehenden Ansprüche, wobei die Verbindung (136, 236) dazu ausgelegt ist, sich zu verformen, wenn eine auf die Trennwand (120, 220) ausgeübte Last einen vorherbestimmten Wert übersteigt, um die Kräfte zu minimieren, die über die Trennwand (120, 220) an eine Fahrzeugkarosserie übertragen werden.

5. Trennwand (120, 220) nach einem der vorangehenden Ansprüche, wobei die verformbare Verbindung (136, 236) zulässt, dass von einer Fahrzeugladung gegen die Trennwand (120, 220) ausgeübte Belastung in einer Vorwärtsrichtung abgeleitet wird, statt in einer Aufwärtsrichtung durch die Trennwand (120, 220) und in die Fahrzeugkarosserie.

6. Trennwand (120, 220) nach einem der vorangehenden Ansprüche, wobei der obere Abschnitt (122, 222) im Wesentlichen aufrecht ist.

7. Trennwand (120, 220) nach einem der vorangehenden Ansprüche, wobei sich der untere Abschnitt (123, 223) nach vorne erstreckt.

8. Trennwand (120, 220) nach Anspruch 7, wobei der obere (122, 222) und der untere (123, 223) Abschnitt unter einem stumpfen Winkel zueinander angeordnet sind.

9. Trennwand (120, 220) nach einem der vorangehenden Ansprüche, wobei die Verbindung (136, 236) zerbrechlich ist.

10. Trennwand (120, 220) nach einem der vorangehenden Ansprüche, wobei der Zapfen (142, 242) zerbrechlich ist.

11. Trennwand (120, 220) nach einem der vorangehenden Ansprüche, wobei der untere Abschnitt (123, 223) Lüftungsöffnungen (25) umfasst.

12. Fahrzeug, das eine Trennwand (120, 220) nach einem der vorangehenden Ansprüche umfasst.

## Revendications

1. Cloison de séparation (120, 220) pour véhicule, la cloison de séparation comprenant une partie supérieure (122, 222) et une partie inférieure séparée (123, 223), la partie supérieure (122, 222) et la partie inférieure (123, 223) étant raccordées l'une à l'autre par un joint déformable (136, 236), **caractérisée en ce que** :
le joint (136, 236) comprend un premier support (138, 238) monté sur la partie supérieure (122, 222), un second support (140, 240) monté sur la partie inférieure (123, 223) et une tige déformable (142, 242) agencée pour raccorder les premier (138, 238) et second (140, 240) supports durant le service normal, et la tige (142, 242) se déforme pour maîtriser un mouvement relatif des premier (138, 238) et second (140, 240) supports sous des conditions de charge par impact.

2. Cloison de séparation (120) selon la revendication 1, dans laquelle la partie supérieure (122) et la partie inférieure (123) ont chacune un cadre tubulaire (128, 129) monté sur le véhicule.

3. Cloison de séparation (220) selon la revendication 1, dans laquelle la partie inférieure (223) comprend une feuille de matériau (229) montée sur le véhicule.

4. Cloison de séparation (120, 220) selon l'une quelconque des revendications précédentes, dans laquelle le joint (136, 236) est conçu pour se déformer quand une charge appliquée à la cloison de séparation (120, 220) dépasse une valeur prédéterminée de manière à minimiser les forces transférées par l'intermédiaire de la cloison de séparation (120, 220) à une carrosserie de véhicule.

5. Cloison de séparation (120, 220) selon l'une quelconque des revendications précédentes, dans laquelle le joint déformable (136, 236) permet de dissiper une charge appliquée par un chargement de véhicule contre la cloison de séparation (120, 220) dans un sens vers l'avant, plutôt que dans un sens vers le haut à travers la cloison de séparation (120, 220) et dans la carrosserie du véhicule.

6. Cloison de séparation (120, 220) selon l'une quelconque des revendications précédentes, dans laquelle la partie supérieure (122, 222) est sensiblement verticale.

7. Cloison de séparation (120, 220) selon l'une quelconque des revendications précédentes, dans laquelle la partie inférieure (123, 223) s'étend vers l'avant.

8. Cloison de séparation (120, 220) selon la revendication 7, dans laquelle les parties supérieure (122, 222) et inférieure (123, 223) sont disposées à un angle obtus l'une par rapport à l'autre.

9. Cloison de séparation (120, 220) selon l'une quelconque des revendications précédentes, dans laquelle le joint (136, 236) est frangible.

10. Cloison de séparation (120, 220) selon l'une quelconque des revendications précédentes, dans laquelle la tige (142, 242) est frangible.

11. Cloison de séparation (120, 220) selon l'une quelconque des revendications précédentes, dans laquelle la partie inférieure (123, 223) comprend des ouvertures de ventilation (25).

12. Véhicule comprenant une cloison de séparation (120, 220) selon l'une quelconque des revendications précédentes.
